# EUROPEAN PATENT APPLICATION

(11) **EP 2 910 296 A1**
(43) Date of publication of application: **26.08.2015**
(21) Application number: 14156470.8
(22) Date of filing: 25.02.2014
(51) Int. Cl.: B01D 53/62

(54) **Flue gas treatment system and method**

(71) Applicant: ALSTOM Technology Ltd, 5400 Baden (CH)
(72) Inventor: Stallmann, Olaf, 55270 Essenheim (DE); Heinz, Gerhard, 73732 Esslingen (DE)
(74) Representative: Alstom Technology Ltd

(57) **Abstract**

The flue gas treatment system (1) comprises a carbonator and a calciner (11), a first cooler (13) for the carbon dioxide discharged from the calciner, a conditioning system (14) for removing impurities from the carbon dioxide coming from the first cooler (13), a recirculation line (15) for the carbon dioxide coming from the conditioning system (14). A second cooler (22) is provided between the first cooler (13) and the conditioning system (14).

## Description

### TECHNICAL FIELD

The present invention relates to a flue gas treating system and method. In particular the present invention refers to treatment systems and method for flue gas generated in large power plants, application in industrial process is anyhow possible.

### BACKGROUND

Flue gas deriving from combustion processes contains a large amount of carbon dioxide. In order to reduce the ambient impact, carbon dioxide is removed from flue gas before the flue gas is released into the atmosphere. Such a removal can be carried out in a number of different ways, such as for example by a carbonator-calciner loop.

EP 2 559 475 discloses a flue gas treatment system by carbonator-calciner loop.

According to EP 2 559 475 flue gas is supplied into a carbonator where it reacts with CaO forming CaCO₃. The flue gas deprived on carbon dioxide is thus released into the atmosphere. The CaCO₃ is supplied into a calciner 40 where it is decomposed by heat into CaO and carbon dioxide. The CaO is supplied back into the carbonator while the carbon dioxide is captured.

The decomposition of CaCO₃ at the calciner 40 occurs at high temperature (higher that the temperature at the carbonator), for this reason heat is supplied to the calciner, in order to reach and maintain the high temperature required. In order to supply heat, a burner 41 is typically associated with the calciner 40. In order to use different types of fuels, from high quality fuels to low quality fuels, EP 2 559 475 teaches of providing indirect heating at the calciner, i.e. heating at the calciner 40 is achieved by heat exchange without mixing of the media that exchange heat.

In addition, according to EP 2 559 475 the carbon dioxide discharged from the calciner 40 is passed through a cooler 43 and is then forwarded to conditioning treatments, for example de-dusting 44. After the conditioning treatments, the carbon dioxide is partly recirculated back into the calciner and partly forwarded to capture.

The recirculated carbon dioxide is used as a cooling medium in the cooler 43 for the carbon dioxide discharged from the calciner 40 and directed to the conditioning treatments 44.

In some instances, the temperature of the recirculated carbon dioxide can be so high, that the heat exchange at the cooler 43 requires high exchange surfaces.

In addition, the temperature of the flue gas, when it undergoes the conditioning treatments (for example de-dusting 44) can be so high, that reliability problems can occur.

### SUMMARY

An aspect of the disclosure includes providing a flue gas treatment system and method by which an effective heat exchange can be achieved at the cooler.

Another aspect of the disclosure includes providing a flue gas treatment system and method by which reliability problems at the components implementing the conditioning treatments can be counteracted.

These and further aspects are attained by providing a system and a method in accordance with the accompanying claims.

### BRIEF DESCRIPTION OF THE DRAWINGS

Further characteristics and advantages will be more apparent from the description of a preferred but non-exclusive embodiment of the system and method, illustrated by way of non-limiting example in the accompanying drawings, in which:
Figure 1 shows and example of a flue gas treatment system for cleaning flue gas from an external source, this configuration can be used for implementation in existing plant but also in new plants;
Figure 2 shows and example of a flue gas treatment system for cleaning flue gas in a stand-alone solution;
Figure 3 shows an enlarged part including the calciner of figure 1;
Figure 4 shows a calciner of the prior art.

### DETAILED DESCRIPTION OF EXEMPLARY EMBODIMENTS

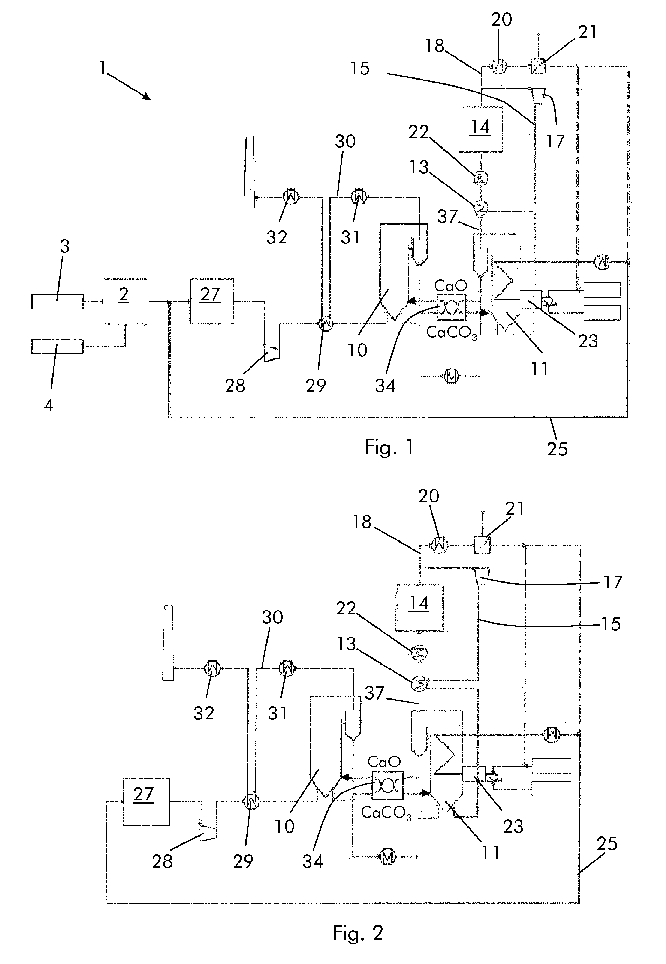

With reference to figure 1, it shows a flue gas treatment system 1 connected downstream of a combustion device 2, such as a boiler or an industrial furnace. The combustion device 2 is preferably an oxygen fuelled device and it is supplied with a fuel from a fuel source 3 and substantially pure oxygen. Naturally also air instead of oxygen can be used. The substantially pure oxygen can be supplied by an ASU 4 or oxygen bottles.

The flue gas treatment system includes a carbonator 10 and a calciner 11.

The carbonator 10 receives flue gas from the combustion device 2 and allows carbon dioxide contained in the flue gas to be combined with a metal oxide, usually CaO, to generate a carbonated metal compound CaCO₃.

The calciner 11 receives the carbonated metal compound CaCO₃ from the carbonator 10 and allows carbonated metal compound separation by heat in carbon dioxide and a metal oxide, such as CaO.

The flue gas treatment system also includes a first cooler 13 for the carbon dioxide separated at the calciner 11 and discharged from it and a conditioning system 14 for removing impurities from the carbon dioxide coming from the first cooler 13.

Downstream of the conditioning system 14, the flue gas treatment system 1 includes a recirculation line 15 for at least a part of the carbon dioxide coming from the conditioning system 14.

The recirculation line 15 is connected to the first cooler 13 and to the calciner 11, such that the carbon dioxide acts as a cooling medium in the first cooler 13 and then it is supplied into the calciner 11.

Preferably the recirculation line 15 also comprises a fan or compressor 17.

In addition, downstream of the conditioning system 14, the flue gas treatment system also includes a line 18 for forwarding the carbon dioxide coming from the conditioning system 14 to further treatments and/or storing. For example the line 18 can include a heat exchanger 20 and a GPU 21 comprising compressors and condensers downstream of the heat exchanger 20.

Advantageously, the flue gas treatment system 1 comprises a second cooler 22 between the first cooler 13 and the conditioning system 14.

In preferred embodiments, the calciner 11 is an indirectly heated calciner. For this reasons the calciner 11 has a burner 23 in which a fuel is combusted to heat the CaCO₃ contained in the calciner 11. The combustion gas generated by the burner 23 is maintained separated from the CaCO₃ and gas contained in the calciner 11, i.e. they do not mix one another. For example, separation surfaces are provided between the combustion product of the burner 23 and the inside of the calciner 11.

A line 25 is provided between the burner 23 and the carbonator 10.

The line 25 supplies the combustion product from the burner 23 to a conditioning device 27, such as an electrostatic precipitator and/or a filter and/or a desulphurization unit, etc. and then these combustion products are supplied into the carbonator 10 via a fan 28 and heat exchanger 29.

The flue gas from the combustion device 2 can be mixed with the combustion products from the burner 23 and sent together into the conditioning device 27, alternatively they can also be separately sent to the conditioning device 27.

Preferably, the calciner 11 is an oxygen propelled calciner, i.e. the burner 23 is supplied with a fuel and with substantially pure oxygen to combust the fuel. Also air is naturally possible.

Figure 2 shows an example of a flue gas treatment system 1 in which no flue gas from external sources are supplied into the carbonator 10; for example the calciner 11 can include tubed surfaces to implement a boiler and the flue gas from the calciner 11 are supplied into the carbonator 10 for cleaning.

The operation of the flue gas treatment system is apparent from that described and illustrated and is substantially the following.

At the combustion device 2 flue gas is generated by combustion of fuel and oxygen. Flue gas is supplied to the conditioning device 27 where it is de-dusted and/or desulphureted or it undergoes other treatments according to the needs.

From the conditioning device 27 the flue gas is supplied into the carbonator 10 via the fan 28 and heat exchanger 29.

At the carbonator 10 there is supplied CaO coming from the calciner 11. Carbon dioxide contained in the flue gas combines with CaO according to the reaction:

CO₂ = CaO → CaCO₃.

From the carbonator 10 flue gas deprived of carbon dioxide CO₂ is thus discharged via line 30. This flue gas deprived of carbon dioxide is preferably cooled to recover heat at heat exchanger 31, then the flue gas is heated again at the heat exchanger 29 to recover heat from the flue gas directed into the carbonator 11, and then the flue gas is cooled again to recover heat at heat exchanger 32.

CaCO₃ formed at the carbonator 10 is forwarded to the calciner 11.

CaO moving from the calciner 11 to the carbonator 10 heats the CaCO₃ moving from the carbonator 10 to the calciner 11 in the heat exchanger 34.

At the calciner CaCO₃ is separated by heat into carbon dioxide and CaO according to the reaction:

CaCO₃ → CO₂ + CaO.

The temperature at the calciner 11 is between 900-1050 °C and for this reasons the burner 23 provides heat by indirect heating. The combustion products from burner 23 are forwarded via line 25 to the conditioning device 27.

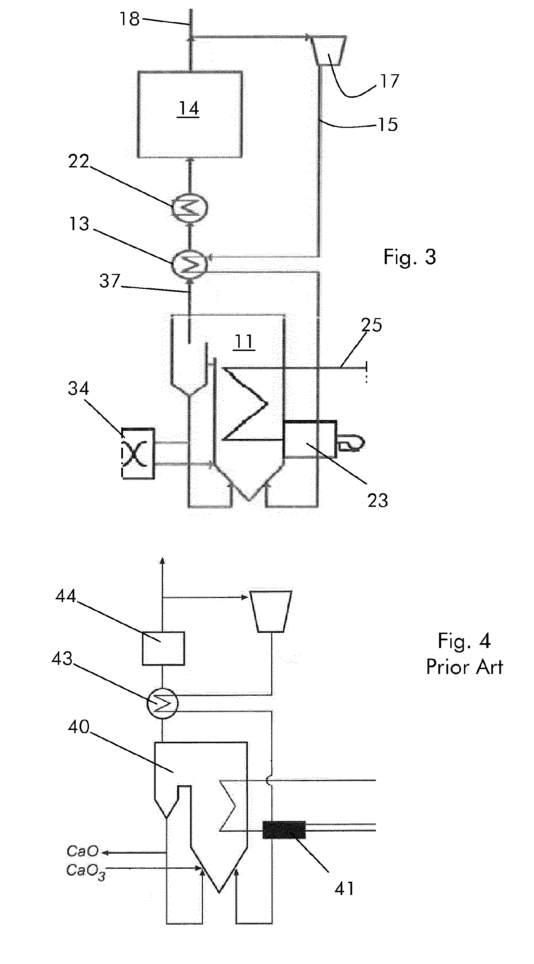

With reference to figure 3, from the calciner 11 carbon dioxide is released via line 37. Carbon dioxide is cooled at the conditioning system 14, such that the carbon dioxide has a temperature optimized for treatment at the conditioning system 14 with limited risks of reduced reliability. Likewise, the temperature of the carbon dioxide is such that reliability problems at the fan 17 are limited.

The carbon dioxide is recirculated and used as a cooling means at the cooler 13.

Thanks to the two coolers 13 and 22, the temperature of the carbon dioxide upstream of the conditioning system 14 can be adjusted to fit the needs for the treatment at the conditioning system 14 and the reliability issues at the conditioning system 14 and fan 17. In addition, since the carbon dioxide is used as a cooling medium only at the first cooler 13, within cooler 13 the temperature difference between the carbon dioxide coming from the calciner 11 and from the fan 17 is large, such that large heat exchange can be achieved also with limited exchanging surfaces in the most of the operating conditions.

The cooler 22 uses as the cooling medium a medium different from carbon dioxide circulating through the line 15; for example an external medium such as air from atmosphere or water can be used as cooling medium at the cooler 22. To optimize the energy requirements the cooler 22 can also feed its heat into a water-steam cycle for power production.

Additionally, the cooler 22 can be used to adjust and regulate the temperature of the carbon dioxide supplied to the conditioning system 14 during transient operations.

The carbon dioxide passing through the conditioning system 14 that is not recirculated through line 15 is then sent to further treatments and possibly storing through heat exchanger 20 and the GPU 21.

The present invention also refers to a process for flue gas treatment.

The process comprises:
receiving flue gas from a combustion device 2 in the carbonator 10 and combining carbon dioxide contained in the flue gas with a metal oxide such as CaO to generate a carbonated metal compound such as CaCO₃,
receiving the carbonated metal compound such as CaO from the carbonator 10 in the calciner 11 and separating the carbonated metal compound such as CaCO₃ by heat in carbon dioxide and a metal oxide such as CaO,
cooling the carbon dioxide separated at the calciner 11 and discharged from it in the first cooler 13,
conditioning the carbon dioxide coming from the first cooler 13 in the conditioning system 14 for removing impurities such as dust and/or sulphur content from it,
recirculating at least a part of the carbon dioxide coming from conditioning to the first cooler 13 and to the calciner 11, such that this recirculated carbon dioxide acts as a cooling medium in the first cooler 13 and it is then supplied into the calciner 11,
forwarding the carbon dioxide to further treatments and/or storing,
cooling the carbon dioxide in the second cooler 22 between cooling in the first cooler 13 and conditioning in the conditioning device 14.

Preferably, the carbon dioxide:
- at the outlet of the calciner 11 has a temperature between 900-1050°C,
- after cooling at the first cooler 13 has a temperature between 300-450°C,
- after cooling at the second cooler 22 has a temperature between 150-400°C,
- the carbon dioxide undergoes no substantial temperature change during conditioning.

In the description reference to CaO and CaCO₃ was made; it is clear that also other metal oxides or carbonated metal compounds can be used.

Naturally the features described may be independently provided from one another.

In practice the materials used and the dimensions can be chosen at will according to requirements and to the state of the art.

### REFERENCE NUMBERS

- 1: flue gas treatment system
- 2: combustion device
- 3: fuel source
- 4: ASU
- 10: carbonator
- 11: calciner
- 13: first cooler
- 14: conditioning system
- 15: recirculation line
- 17: fan
- 18: line
- 20: heat exchanger
- 21: GPU
- 22: second cooler
- 23: burner
- 25: line
- 27: conditioning device
- 28: fan
- 29: heat exchanger
- 30: line
- 31: heat exchanger
- 32: heat exchanger
- 34: heat exchanger
- 37: line
- 40: calciner
- 41: burner
- 43: cooler
- 44: de-dusting

## Claims

1. A flue gas treatment system (1) comprising
a carbonator (10) for receiving flue gas from a combustion device (2) and having carbon dioxide contained in the flue gas combined with a metal oxide (Cao) to generate a carbonated metal compound (CaCO₃),
a calciner (11) for receiving the carbonated metal compound (CaCO₃) from the carbonator (10) and separating it by heat in carbon dioxide and a metal oxide (CaO),
a first cooler (13) for the carbon dioxide separated at the calciner (11) and discharged from it,
a conditioning system (14) for removing impurities from the carbon dioxide coming from the first cooler (13),
a recirculation line (15) for at least a part of the carbon dioxide coming from the conditioning system (14), the recirculation line (15) being connected to the first cooler (13) and to the calciner (11) for the carbon dioxide to act as a cooling medium in the first cooler (13) and then be supplied into the calciner (11),
**characterised by** comprising a second cooler (22) between the first cooler (13) and the conditioning system (14).

2. The flue gas treatment system (1) of claim 1, **characterised in that** the recirculation line (15) comprises a fan or compressor (17).

3. The flue gas treatment system (1) of claim 1, **characterised in that** the calciner (11) is an indirectly heated calciner.

4. The flue gas treatment system (1) of claim 1, **characterised in that** the calciner (11) is an oxygen propelled calciner.

5. The flue gas treatment system (1) of claim 1, **characterised by** further comprising a line (18) for forwarding at least a part of the carbon dioxide coming from the conditioning system (14) to further treatment and/or storing.

6. The flue gas treatment system (1) of claim 5, **characterised in that** the the line (18) for forwarding at least a part of the carbon dioxide to further treatment and/or storing includes a heat exchanger (20).

7. The flue gas treatment system (1) of claim 5, **characterised in that** the line (18) for forwarding at least a part of the carbon dioxide to further treatment and/or storing includes a GPU (21).

8. The flue gas treatment system (1) of claim 6 and 7, **characterised in that** the GPU (21) is downstream of the heat exchanger (20).

9. A process for flue gas treatment comprising
receiving flue gas from a combustion device (2) in a carbonator (10) and combining carbon dioxide contained in the flue gas with a metal oxide (CaO) generating a carbonated metal compound (CaCO₃),
receiving the carbonated metal compound (CaCO₃) from the carbonator (10) in a calciner (11) and separating the carbonated metal compound (CaCO₃) by heat in carbon dioxide and a metal oxide (CaO),
cooling the carbon dioxide separated at the calciner and discharged from it in a first cooler (13),
conditioning the carbon dioxide coming from the first cooler (13) for removing impurities from it,
recirculating at least a part of the carbon dioxide coming from conditioning to the first cooler (13) and to the calciner (11), to act as a cooling medium in the first cooler (13) and then be supplied into the calciner (11),
**characterised by** cooling the carbon dioxide in a second cooler (22) between cooling in the first cooler (13) and conditioning.

10. The method of claim 9, **characterised in that** the carbon dioxide at the outlet of the calciner (11) has a temperature between 900-1050°C.

11. The method of claim 9, **characterised in that** the carbon dioxide after cooling at the first cooler (13) has a temperature between 300-450°C.

12. The method of claim 9, **characterised in that** the carbon dioxide after cooling at the second cooler (22) has a temperature between 150-400°C.

13. The method of claim 9, **characterised in that** the carbon dioxide undergoes no substantial temperature change during conditioning.

14. The method of claim 9, **characterised by** forwarding at least a part of the carbon dioxide to further treatment and/or storing.
